(19) **Europäisches Patentamt European Patent Office Office européen des brevets**

(11) **EP 4 472 007 A1**

(12) **EUROPEAN PATENT APPLICATION**
published in accordance with Art. 153(4) EPC

(43) Date of publication:
04.12.2024 Bulletin 2024/49

(21) Application number: 22923307.7

(22) Date of filing: 27.09.2022

(51) International Patent Classification (IPC):
$H02J\ 3/06^{(2006.01)}$

(52) Cooperative Patent Classification (CPC):
G06F 17/15; H02J 3/06; H02J 3/46; Y02P 90/84

(86) International application number:
PCT/CN2022/121563

(87) International publication number:
WO 2023/142503 (03.08.2023 Gazette 2023/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.01.2022 CN 202210088506

(71) Applicant: Zhuzhou CRRC Times Electric Co., Ltd.
Zhuzhou, Hunan 412001 (CN)

(72) Inventors:
• CAO, Jia
Zhuzhou, Hunan 412001 (CN)
• LIU, Xiong
Zhuzhou, Hunan 412001 (CN)

• WANG, Long
Zhuzhou, Hunan 412001 (CN)
• CHEN, Wenguang
Zhuzhou, Hainan 412001 (CN)
• WEI, Zhouyan
Zhuzhou, Hunan 412001 (CN)
• HE, Tao
Zhuzhou, Hunan 412001 (CN)
• TAN, Xiaohui
Zhuzhou, Hunan 412001 (CN)
• FU, Chengyong
Zhuzhou, Hunan 412001 (CN)

(74) Representative: Petraz, Gilberto Luigi et al
GLP S.r.l.
Viale Europa Unita, 171
33100 Udine (IT)

(54) **CARBON EMISSION DEMAND RESPONSE PROCESSING METHOD AND APPARATUS, AND COMPUTER DEVICE AND STORAGE MEDIUM**

(57) Provided in the present disclosure are a carbon emission demand response processing method, apparatus, computer device, and storage medium. The method comprises: establishing, for a power transmission network, a power distribution network, and a microgrid, an optimal power flow model targeting at minimizing carbon emissions at system level; solving the optimal power flow model to obtain related Lagrangian multipliers in front of power flow equations of individual nodes, and defining the related Lagrangian multipliers in front of the power flow equations of individual nodes as node marginal carbon emission quotas; and processing participation in demand response based on the optimal power flow model by subjecting loads to regional division and/or no regional division.

Fig. 1

## Description

### Cross-reference of related applications

The present application claims the benefit of the Chinese Patent Application No. CN202210088506.7, titled "Carbon emission demand response processing method, apparatus, computer device, and storage medium" filed on January 25, 2022, the content of which is incorporated herein by reference.

### Field of Technology

The present disclosure relates to the field of low-carbon application technology in power systems, and in particularly, to a carbon emission demand response processing method, apparatus, computer device, and storage medium.

### Background

Recently, carbon dioxide emissions from the power industry account for more than 40% of China's total carbon dioxide emissions. As such, "carbon reduction", "carbon reducing" in power systems may be the major way to achieve carbon neutrality. At present, implementation of "carbon reduction", "carbon emission reduction" in the power industry is mainly applied on of power generation side of a power system, in which carbon dioxide emissions can be reduced by ways such as installing advanced carbon capture devices, adjusting power supply construction to reduce the proportion of coal-fired power generation, improving the efficiency of coal-fired power units, and obsoleting traditional small and medium-sized power plants with high carbon emission intensity. From the perspective of power generation side, although these above approaches can to some extent reduce carbon emissions, there is still a gap from the "carbon peaking and carbon neutrality" goals. From the perspective of a power system, therefore, carbon reduction approaches in the power industry should have not only limited to the power generation side, but also considered both transmission and consumption stages of the power system, so that the concept of carbon reduction/reducing works throughout stages of the power system, i.e., generation, transmission, distribution, and consumption. On the one hand, by using reasonable transmission planning, an entire transmission path of electricity is optimized to reduce energy loss on transmission lines, thereby achieving the effect of carbon reduction/reducing; on the other hand, loads serving as a user side actively participate in demand response with using marginal carbon emission intensity or carbon tax cost of nodes at the user side as response signals, and the loads are distributed actively and reasonably in the dimensions of time and space, thereby achieving the effect of carbon reduction/reducing.

Therefore, there is an urgent need for a method for processing carbon emission demand response, which achieves the goal of power system carbon reduction/reducing from the perspective of user side, and solves the problem that loads participate in the demand response based on node marginal carbon emission signals in a condition that there is a demand response model applicable on both normal and fault conditions of a power transmission network, a power distribution network, and a microgrid, etc.

### Summary

Accordingly, it is necessary to provide a method, apparatus, computer device, and storage medium for processing carbon emission demand response in view of the above-mentioned technical problem.

A method for processing carbon emission demand response is provided, comprising: establishing an optimal power flow model targeting at minimizing carbon emissions at system level for a power transmission network, a power distribution network, and a microgrid; solving the optimal power flow model to obtain related Lagrangian multipliers in front of power flow equations of individual nodes, and defining the related Lagrangian multipliers in front of the power flow equations of individual nodes as node marginal carbon emission quotas; and processing participation in demand response based on the optimal power flow model by subjecting loads to regional division and/or no regional division.

An apparatus for processing carbon emission demand response is provided, comprising a model establishing module, a marginal carbon emission quota acquisition module, and a response processing module. The model establishing module is configured to establish an optimal power flow model targeting at minimizing carbon emissions at system level for a power transmission network, a power distribution network, and a microgrid; the marginal carbon emission quota acquisition module is configured to solve the optimal power flow model to obtain related Lagrangian multipliers in front of power flow equations of individual nodes, and define a related Lagrangian multiplier in front of a power flow equation of an individual node as a node marginal carbon emission quota; and the response processing module is configured to process participation in demand response according to the optimal power flow model by subjecting loads to regional division and/or no regional division.

A computer device is provided, comprising a memory and a processor, wherein the memory stores a computer program which, when being executed by the processor, implements the steps of the method for processing carbon emission demand response as described above.

A computer-readable storage medium is provided, on which a computer program is stored, wherein the computer program, when being executed by the processor, implements the steps of the method for processing carbon emission demand response as described above.

## Brief Description of the Drawings

Fig. 1 is a flowchart of a method for processing carbon emission demand response according to an embodiment;

Fig. 2 is a block diagram of a structure of an apparatus for processing carbon emission demand response according to an embodiment;

Fig. 3 is a diagram showing an internal structure of a computer device according to an embodiment

Fig. 4A is a diagram showing architecture of a 5-node transmission network system in a power grid system according to an embodiment;

Fig. 4B is a diagram showing architecture of a 30-node distribution network system including on-grid wind power according to an embodiment;

Fig. 4C is a diagram showing architecture of a 30-node microgrid system including power sources in a distributed pattern according to an embodiment;

Fig. 5 is a diagram showing architecture of a 30-node distribution network system including on-grid wind power, which is subjected to regional division, according to an embodiment.

## Detailed Description of the Embodiments

The specific embodiments of the present disclosure are described in detail below in conjunction with the drawings.

In order to make the objectives, technical solutions and advantages of this disclosure clearer, the present disclosure are described in detail below in conjunction with the drawings and the embodiments. It should be understood that the specific embodiments described herein are intended only to explain the present disclosure rather than to limit the present disclosure.

Embodiment 1

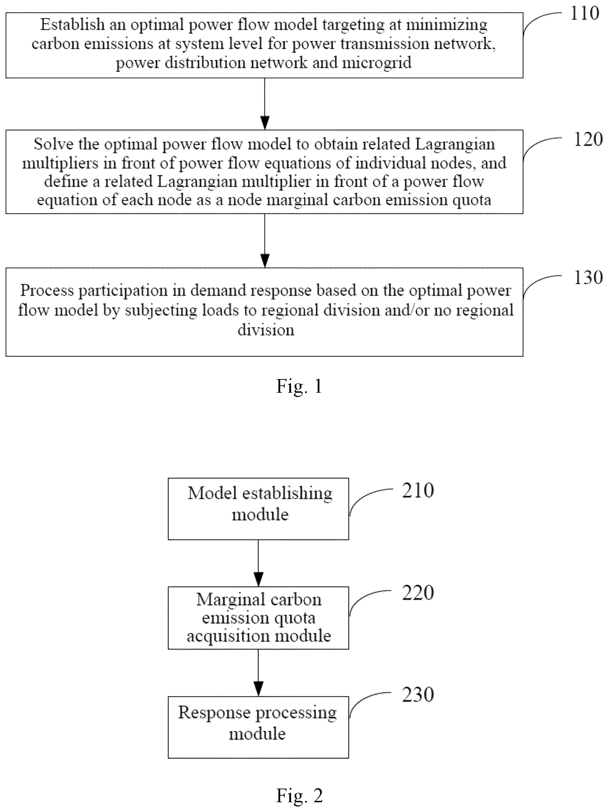

In the present embodiment, as shown in Fig. 1, provided is a method for processing carbon emission demand response, including steps 110 to 130.

Step 110, an optimal power flow model targeting at minimizing carbon emissions at system level is established for a power transmission network, a power distribution network, and a microgrid.

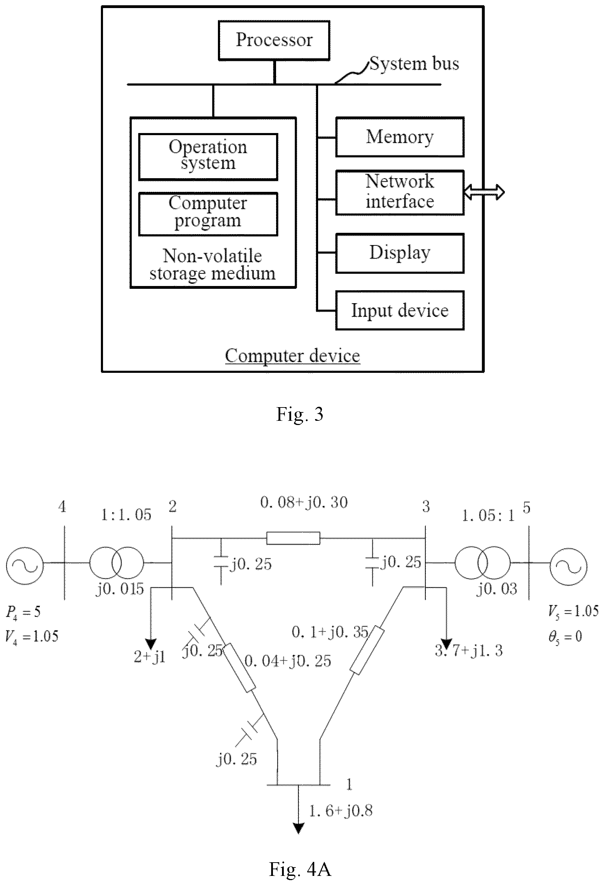

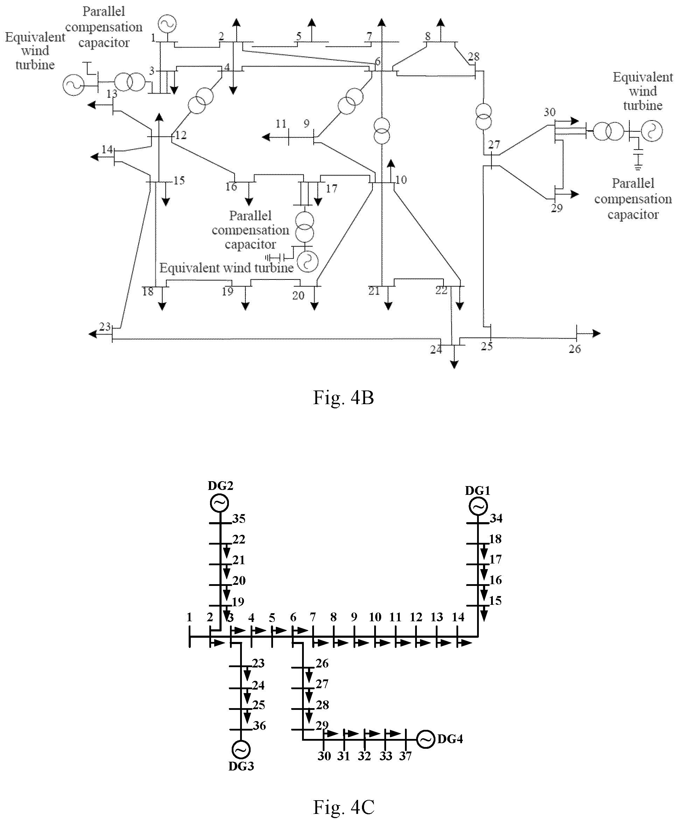

In the embodiment, for a power transmission network system shown in Fig. 4A, Node 4 and Node 5 are connected to generators, respectively, wherein the Node 4 is a PV node and the Node 5 is a balance node. Thus, the power transmission network system can maintain system frequency stability through the balance node, and utilize other generator units together with other balance units for system load bearing and system voltage level maintaining. For a power distribution network shown in Fig. 4B, Node 1 is connected to the power grid, so it can also be considered that the power distribution network system can maintain system frequency stability through this balance node and utilize other wind power generator units together with other balance units for system load bearing and system voltage level maintaining. For a microgrid shown in Fig. 4C, there is no balance node for the system to be connected to the major power grid, so that it is necessary to maintain the stabilities of voltage and frequency of the system by means of power sources in a distributed pattern though a specific control method. This is the most significant difference between the microgrid and the transmission and power distribution networks.

In this step, the optimal power flow model targeting at minimizing carbon emissions at system level is established for the power transmission network, the power distribution network, and the microgrid, wherein the optimal power flow model targeting at minimizing carbon emissions at system level is:

$$\begin{cases} \min \ f(\boldsymbol{x}) \\ s.t. \quad \boldsymbol{h(x)} \ = \ 0 \\ \qquad \boldsymbol{g(x)} \ \geq \ 0 \end{cases}$$

in which $f(\boldsymbol{x})$ represents objective functions of the system, $\boldsymbol{h(x)}$ represents a power flow equation of the transmission or distribution network, and it also represents a power flow equation and a droop node control equation that are modified with respect to the microgrid, $\boldsymbol{g(x)}$ represents an inequality-formed constraint composed of safety constraints of the system, and x represents a vector composed of a state variable and a control variable of the system.

Step 120, the optimal power flow model is solved to obtain related Lagrangian multipliers in front of power flow equations of individual nodes, and a related Lagrangian multiplier in front of a power flow equation of an individual node are defined as a node marginal carbon emission quota.

In one embodiment, the step of solving the optimal power flow model to obtain related Lagrangian multipliers in front of the power flow equations of individual nodes includes: solving the optimal power flow model using Primal-dual interior point method to obtain the related Lagrangian multipliers in front of the power flow equations of individual nodes.

In the present embodiment, under a normal operating condition, Primal-dual interior point method is used for solution-solving. The related Lagrangian multiplier in front of the power flow equation of each node can be defined as a node marginal carbon emission quota $\lambda_{ci}$, and loads may be or may not be subjected to regional division to participate in demand response.

Step 130, participation in demand response is processed based on the optimal power flow model by subjecting the loads to regional division and/or no regional division.

In the embodiment, in the case that loads are subjected to regional division and in the case that the loads are subjected to no regional division, different methods are used to process participation in demand response.

In the above embodiments, the method for processing demand response based on node marginal carbon emissions, which is applicable equally to a power transmission network, a power distribution network and a microgrid and is implemented in such a way that it is loads at user side to participate in demand response, thereby achieving further carbon saving and reduction at an end of loads.

In one embodiment, the step of processing participation in demand response based on the optimal power flow model by subjecting the loads to regional division and/or no regional division includes: when the loads are subjected to no regional division, processing participation in demand response according to the optimal power flow model, based on respective node marginal carbon emission quotas, with minimization of carbon emissions at user side as a goal of demand response.

In this embodiment, in the case that the loads are subjected to no regional division, a load of an individual node participates in demand response by using a load at a predetermined proportion $k$ in terms of its own load condition. The following formula can be obtained based on this optimal power flow model according to respective node marginal carbon emission quotas $\lambda_{ci}$, with minimization of carbon emissions at user side as a goal of demand response:

$$\begin{cases} \min \ \sum_{i=1}^{N} \lambda_{ci} P_{Di} \\ s.t. \ \sum_{i=1}^{N} P_{Di} \ = \ P_{load} \\ \qquad P_{Di}^{\min} \ \leq \ P_{Di} \ \leq \ P_{Di}^{\max} \end{cases}$$

in which $P_{Di}$ represents a load of an individual node after participating in demand response, $P_{load}$ represents a total of loads of the individual node, $P_{Di}^{\max}$、$P_{Di}^{\min}$ represent upper and lower limits of the load of the individual node after participating in demand response, and N represents the number of nodes in the system. Using the method for processing demand response as illustrated by the above formula, it is possible to transfer loads of a node of high carbon emission in the entire system to loads of a node of low carbon emission, and process participation in demand response with minimization of carbon emissions of the entire system as an ultimate goal.

In one embodiment, the step of processing participation in demand response based on the optimal power flow model by subjecting the loads to regional division and/or no regional division includes: when the loads are subjected to regional division, dividing the power grid system into a plurality of subregions; calculating an average carbon emission quota for each of the subregions based on the optimal power flow model; and comparing the average carbon emission quotas of respective subregions, and transferring the loads of some nodes in a subregion with a high average carbon emission quota to a subregion with a low average carbon emission quota when difference in the average carbon emission quotas of the respective subregions is greater than a preset threshold.

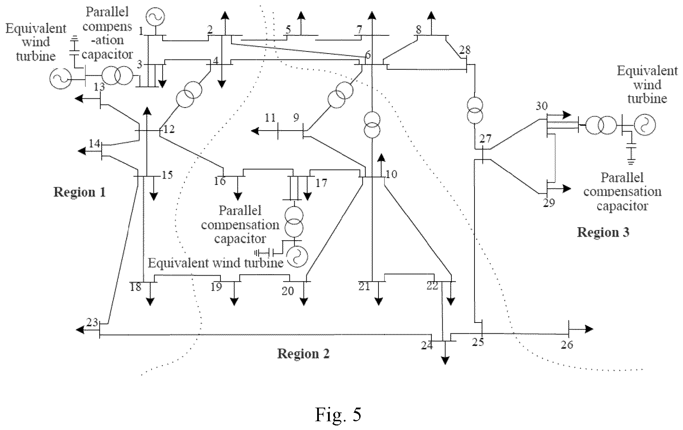

It should be understood that in the case that the loads are subjected to no regional division, due to limitation of load capacity of demand response, it is impossible to transfer all loads of the node of high carbon emission to the node of low carbon emission, so that advantages of the above demand response strategy cannot be fully leveraged. Therefore, in order to avoid the above problem, in the present embodiment, a 30-node distribution network system including on-grid wind power as shown in Fig. 5 is subjected to regional division of loads. Dashed lines in Fig. 5 represent sections for regional division, that is, loads are divides into three subregions according to the dashed line markers in Fig. 5. The most significant characteristics of the regional division of loads are that, first, an optimization issue aimed at minimizing carbon emissions of loads of the entire system has been transformed into an optimization issue aimed at minimizing carbon emissions of loads of respective subregions; then, an average carbon emission quota for the loads of each subregion is calculated, and if there are significant difference among the average carbon emission quotas of respective subregions and the subregions still have the load capacity for participating in demand response, then a node of high carbon emission at a region of high carbon emission is further transferred to a node of low carbon emission at a region of low carbon emission, which is equivalent to being transformed into a dual optimization case. The specific process thereof is as follows.

Firstly, with respect to subregions $j \in N_A$, demand response is carried out for each of the subregions to obtain:

$$\begin{cases} \min \sum_{i=1}^{N_j} \lambda_{ci} P_{Di} \\ s.t. \sum_{i=1}^{N_j} P_{Di} = P_{load-A_j}, \ \forall j \in N_A \\ P_{Di}^{min} \leq P_{Di} \leq P_{Di}^{max} \end{cases}$$

in which $N_A$ represents a set of load subregions and $N_j$ represents the number of load nodes in the $j$th subregion. Loads participating in demand response are substituted into the optimal power flow model as shown in the fomular (1) to obtain the carbon emission quotas of the loads of respective nodes after participating in demand response. The average carbon emission quotas $\overline{\lambda}_{cj}$ of respective regions are calculated according to the formula, that is

$$\overline{\lambda}_{cj} = \frac{\sum_{i=1}^{N_j} (\lambda_{cj} \cdot P_{Di})}{\sum_{i=1}^{N_j} P_{Di}}, \ \forall j \in N_A$$

Then, differences $\varsigma$ between the average carbon emission quotas $\overline{\lambda}_{cj}$ of respective regions are compared, respectively. If a difference $\varsigma$ is greater than a set threshold value $\sigma$, it is considered proceeding to a second level of demand response for the loads. That is, within a range of load capacity for participation in demand response, it is considered transferring loads of some nodes of high marginal carbon emission from a region with high average carbon emission quota to a region with low average carbon emission quota, that is, this region with low average carbon emission quota adds, on the basis of its original load, some further loads $\Delta P_{load-EX-Aj}$ transferred from some regions, and it is obtained that

$$P'_{load-Aj} = P_{load-Aj} + \Delta P_{load-EX-Aj}.$$

$$\begin{cases} \min \ \sum_{i=1}^{N_j} \lambda'_{ci} P'_{Di} \\ s.t. \ \sum_{i=1}^{N_j} P'_{Di} = P'_{load-A_j} \quad , \ \forall j \in N_A \\ P'^{\min}_{Di} \leq P'_{Di} \leq P'^{\max}_{Di} \end{cases}$$

As mentioned above, performing regional division for the loads to participate in demand response can get rid of the disadvantage that the outcome of demand response without regional division is limited by the load capacity, and further enhance the initiative of the user side to participate in system-level carbon reduction/reducing. From the perspective of practical application, it is possible for manufacturing enterprises and companies in the city, such as a water supply company and that having multiple different regions to significantly reduce the total carbon emission at the user side according to the above demand response strategies, and improve effective interaction between the user side and the power supply side.

In one embodiment, after the steps of solving the optimal power flow model to obtain related Lagrangian multipliers in front of the power flow equations of individual nodes and defining the related Lagrangian multipliers in front of the power flow equations of individual nodes as node marginal carbon emission quotas, it is further included that: under a fault condition, performing power flow calculation on the power transmission network, the power distribution network, and the microgrid based on the preset power flow equations to obtain voltage stability indicators of individual branches in the system; obtaining load reactive power of the branches, respectively, through calculation based on the optimal power flow model and the voltage stability indicators of individual branches; obtaining load reactive power of individual nodes, respectively, through calculation based on the load reactive power of the branches, and determining load active power of individual nodes, respectively, based on the load reactive power of individual nodes.

In this embodiment, when there are line disconnection in the power grid, generator failure at power supply side, and wind and solar power abandonment as a result of insufficient high/low voltage ride through capacity for new energy access, or even when severe power grid failure happens so that the grid disintegrates into "islands" for operation, the user side immediately switches from a mode of participating in demand response that targets at reducing carbon emissions under the normal operating condition to a demand response mode targeting at voltage stability. After the operation of the power grid stabilizes, the user side then switches back to the operating mode for carbon reduction/reducing.

Therefore, under the fault condition, power flow calculation (i.e., the optimal power flow model) should be carried out equally on the power transmission network, the power distribution network, or the microgrid. If the power grid does not suffer from disintegration under the fault condition, the corresponding power flow equations can be solved using the Newton-Raphson method or the improved Levenberg-Marquardt method and the voltage stability indicators of individual branches are calculated, that is,

$$L_i = 4(XP_j - RQ_j)^2 + XQ_j + RP_j$$

in which $P_i, Q_i$ represent active power and reactive power of a node $i$ at intermediate segment of a line, $P_j, Q_j$ represent active power and reactive power of a node $j$ at the end of the line, and $A, X$ represent the resistance and the reactance between a line i-j. Therefore, a voltage stability indicator $L$ of the entire system is taken as the maximum voltage stability indicator of all branches, and the degree of voltage stability of the system can be determined based on a gap between the value $L$ and a critical value of 1.0. According to the formula below, a model for the loads to participate in demand response under the fault condition based on the voltage stability indicators $L_i$ of the branches is that

$$\begin{cases} \min \ \sum_{i=1}^{N} L_i Q_{BLi} \\ s.t. \ \sum_{i=1}^{N} Q_{BLi} = Q_{load} \\ Q^{\min}_{BLi} \leq Q_{BLi} \leq Q^{\max}_{BLi} \end{cases}$$

in which $Q_{BLi}$ is reactive power of loads on the ith branch, $Q_{load}$ is total reactive power of loads of all branches in the system, and $Q_{BLi}^{max}$, $Q_{BLi}^{min}$ are upper and lower limits of the reactive power of loads on the ith branch. After allocation of the reactive power of loads on the branches is determined, the reactive power of loads at individual nodes are determined by calculation. Assuming that the loads of an individual node employ a constant power factor, upon determination of the reactive power of loads of the node, the active power of loads of the node can be determined. After the system fault is eliminated and the system is stabilized, the system then operates in the demand response mode targeting at minimizing carbon emissions at system level.

Under fault conditions, if a serious fault occurs and causes the power grid to operate as "islands", in order to avoid the situation where Jacobian matrix of the power flow equation of an "islanded" grid is singular so that the Newton method fails to converge or has no solution, the improved Levenberg-Marquardt method can be used to obtain the least squares solution, thereby providing information for subsequent power flow adjustment and improvement. After the power flow calculation of the "islanded" grids is completed, appropriate adjustments are made to ensure the stable operation of the "islanded" grids. First is to carry out power flow calculation for the major power grid through virtual interconnection lines among the "islanded" grids by following an idea of performing alternating iteration of power flow. The power flow calculation of the "islanded" grids is completed until power errors of the virtual interconnection lines are within a predetermined error accuracy range, and real interconnection lines are added then to gradually restore the power grid to a stable state like that before the fault. Secondly, after the power flow calculation of the "islanded" microgrid is completed, the loads are redistributed based on the demand response strategy targeting at voltage stability in the formula (7) by following an idea of performing regional division on the loads under a normal operation condition, so that the "islanded" grids are restored to a stable state. Then, through the alternating iteration algorithm of power flow, interconnection lines are added to restore the system to the stable state before the fault. When the fault condition reaches a normal stable operating state by adding the interconnection lines and redistributing the loads, the system then carries out the demand response mode targeting at minimizing carbon emissions at system level.

In summary, the present disclosure proposes a demand response strategy of minimizing system carbon emissions in the case that the power transmission network, the power distribution network and the microgrid are all under normal operating conditions. In this case, according to differences in system construction, it is discussed about demand response strategies for the loads of the system that are subjected to regional division and no regional division, respectively, so that it is possible to further break the limitation of original demand response strategy of the system being limited by the load capacity of the system, thereby reducing the total carbon emission of the entire system. Turning to a mode regarding fault, firstly, it is discussed about the power flow calculation method for restoring from a "fault" operating mode to a "normal" operating mode, then it is proposed a demand response strategy targeting at system voltage stability, and finally, when the major system has operated stably, a demand response mode targeting at carbon reduction/reducing under the normal operating condition, thereby further reducing the total carbon emission of the entire major system.

In one embodiment, the step of establishing the optimal power flow model targeting at minimizing carbon emissions at system level for the power transmission network, the power distribution network, and the microgrid includes: establishing objective functions that minimize system carbon emissions for the power transmission network, the power distribution network, and the microgrid, respectively; obtaining power flow equations corresponding to power balance of the nodes in the power transmission network, the power distribution network, and the microgrid, respectively, and applying the power flow equations corresponding to power balance of the nodes as equality-formed constraint equations for system carbon emission optimization; obtaining safety constraints for the power transmission network, the power distribution network, and the microgrid, respectively, and establishing inequality-formed constraint equations for system carbon emission optimization based on the constraints, wherein the safety constraints include active and reactive power output limits for a generator unit, voltage amplitude limit of a node, power limit of a line, and frequency limit of a system; and establishing an optimal power flow model targeting at minimizing carbon emissions at system level based on the objective functions that minimize system carbon emissions, the equality-formed constraint equations, and the inequality-formed constraint equations.

An objective function that minimizes system carbon emissions can be established equally with respect to the power transmission network, the power distribution network, and the microgrid. The power flow equations corresponding to power balance of the nodes serve as equality-formed constraints for the system carbon emission optimization, which involve active and reactive power output limits of a generator unit, voltage amplitude limit of a node, power limit of a line, frequency limit of a system, etc., and safety constraints for system operation serve as inequality-formed constraints for system carbon emission optimization. Therefore, establishing the optimal power flow model targeting at minimizing carbon emissions can be simplified as an expression involving multiple variations, multiple constraints, and nonlinear optimization as shown by the following formulas that are

$$\begin{cases} \min \ f(\boldsymbol{x}) \\ s.t. \quad \boldsymbol{h}(\boldsymbol{x}) = 0 \\ \qquad \boldsymbol{g}(\boldsymbol{x}) \geq 0 \end{cases}$$

in which $f(\mathbf{x})$ represents objective functions of the system, $\boldsymbol{h}(\boldsymbol{x})$ represents a power flow equation of the transmission or distribution network, it also represents a power flow equation and a droop node control equation that are modified with respect to the microgrid, $\boldsymbol{g}(\boldsymbol{x})$ represents an inequality-formed constraint composed of the safety constraints of the system, and $\boldsymbol{x}$ represents a vector composed of a state variable and a control variables of the system.

Embodiment 2

Firstly, for a power transmission network system shown in Fig. 4A, Node 4 and Node 5 are connected to generators, respectively, wherein the Node 4 is called a PV node and the Node 5 is called a balance node. Thus, the power transmission network system can maintain system frequency stability through the balance node, and utilize other generator units together with other balance units for system load bearing and system voltage level maintaining. For a power distribution network shown in Fig. 4B, Node 1 is connected to the power grid, so it can also be considered that the power distribution network system can maintain system frequency stability through this balance node and further utilize other wind power generator units together with other balance units for system load bearing and system voltage level maintaining. For a microgrid shown in Fig. 4C, there is no balance node for the system to be connected to the major power grid, so that it is necessary to maintain the stabilities of voltage and frequency of the system by means of power sources in a distributed pattern though a specific control method. This is the most significant difference between the microgrid and the transmission and power distribution networks.

An objective function that minimizes system carbon emissions can be established equally with respect to the power transmission network, the power distribution network, and the microgrid. Power flow equations corresponding to power balance of nodes serve as equality-formed constraints for system carbon emission optimization, which involve active and reactive power output limits of a generator unit, voltage amplitude limit of a node, power limit of a line, frequency limit of a system, etc., and safety constraints for system running serve as inequality-formed constraints for system carbon emission optimization. Therefore, establishment of an optimal power flow model targeting at minimizing carbon emissions can be simplified as an expression involving multiple variations, multiple constraints, and nonlinear optimization as shown by the formula (1), that are,

$$\begin{cases} \min \ f(\boldsymbol{x}) \\ s.t. \quad \boldsymbol{h}(\boldsymbol{x}) = 0 \\ \qquad \boldsymbol{g}(\boldsymbol{x}) \geq 0 \end{cases} \qquad\qquad (1)$$

in which $f(\mathrm{x})$ represents objective functions of the system, $\boldsymbol{h}(\boldsymbol{x})$ represents a power flow equation of the transmission or distribution network, it also represents a power flow equation and a droop node control equation that are modified with respect to the microgrid, $\boldsymbol{g}(\boldsymbol{x})$ represents inequality-formed constraints composed of constraints of the system, and $\boldsymbol{x}$ represents a vector composed of a state variable and a control variables of the system.

Demand response method under normal operating condition

The optimal power flow model, i.e., the above formula (1), targeting at minimizing carbon emissions at system level is established uniformly with respect to the power transmission network, the power distribution network, and a microgrid, and it is solved using Primal-dual interior point method. A related Lagrangian multiplier in front of a power flow equation of each node can be defined as a node marginal carbon emission quota $\lambda_{cj}$, and loads may be subjected to regional division or no regional division to participate in demand response.

A. Loads subjected to no regional division

According to condition of a load of an individual node, assuming that the load participates in demand response by using a load at a predetermined proportion k of its own load, and obtained according to respective node marginal carbon emission quotas $\lambda_{cj}$, with minimization of carbon emissions at user side as a goal of demand response, is that

$$\begin{cases} \min \sum_{i=1}^{N} \lambda_{\mathrm{c}i} P_{\mathrm{D}i} \\ s.t. \sum_{i=1}^{N} P_{\mathrm{D}i} = P_{\mathrm{load}} \\ P_{\mathrm{D}i}^{\min} \leq P_{\mathrm{D}i} \leq P_{\mathrm{D}i}^{\max} \end{cases} \qquad (2)$$

in which $P_{\mathrm{D}i}$ represents a load of an individual node after participating in demand response, $P_{\mathrm{load}}$ represents a total of loads of the individual node, $P_{\mathrm{D}i}^{\max}$、 $P_{\mathrm{D}i}^{\min}$ represents upper and lower limits of the load of the individual node after participating in demand response, and N represents the number of nodes in the system. Using the method for processing demand response as illustrated by the above formula (2), it is possible to transfer loads of nodes of high carbon emission in the entire system to loads of nodes of low carbon emission, with minimization of carbon emissions of the entire system as an ultimate goal. However, this demand response strategy is to some extent limited by load capacity for participating in demand response as well as on-grid capacity of new energy.

B. Loads subjected to regional division

The above-mentioned loads are subjected to no regional division, so that it is impossible to transfer all loads of the nodes of high carbon emission to the nodes of low carbon emission due to limitation of the load capacity for participating in demand response, so that advantages of the above demand response strategy cannot be fully leveraged. Therefore, in order to avoid the above problem, a 30-node distribution network system including on-grid wind power as shown in Fig. 5 is subjected to regional division of loads. That is, the loads are divides into three regions according to dashed line markers in Fig. 5. The most significant characteristics of regional division of loads are that, first, an optimization issue aimed at minimizing carbon emissions of the loads of the entire system has been transformed into an optimization issue aimed at minimizing carbon emissions of loads of respective regions; then, an average carbon emission quota for the loads of each region is calculated, and if there are significant difference among the average carbon emission quotas of respective regions and the regions still have the load capacity for participating in demand response, then a node of high carbon emission at a region of high carbon emission is further transferred to a node of low carbon emission at a region of low carbon emission, which is equivalent to being transformed into a dual optimization case.

Firstly, with respect to divided regions $j \in N_{\mathrm{A}}$, demand response is carried out for each of the subregions, that is

$$\begin{cases} \min \sum_{i=1}^{N_j} \lambda_{\mathrm{c}i} P_{\mathrm{D}i} \\ s.t. \sum_{i=1}^{N_j} P_{\mathrm{D}i} = P_{\mathrm{load}-A_j} , \ \forall j \in N_{\mathrm{A}} \\ P_{\mathrm{D}i}^{\min} \leq P_{\mathrm{D}i} \leq P_{\mathrm{D}i}^{\max} \end{cases} \qquad (3)$$

in which $N_{\mathrm{A}}$ represents a set of load subregions and $N_j$ represents the number of load nodes in the $j$th subregion. Loads participating in demand response are substituted into the optimal power flow model shown in the fomular (1) to obtain the carbon emission quotas of the loads of respective nodes after participating in demand response. The average carbon emission quotas $\overline{\lambda}_{\mathrm{c}j}$ of respective regions are calculated according to the following formula (4), that is

$$\overline{\lambda}_{\mathrm{c}j} = \frac{\sum_{i=1}^{N_j} (\lambda_{\mathrm{c}j} \cdot P_{\mathrm{D}i})}{\sum_{i=1}^{N_j} P_{\mathrm{D}i}} , \ \forall j \in N_{\mathrm{A}} \qquad (4)$$

Then, differences $\varsigma$ between the average carbon emission quotas $\overline{\lambda}_{cj}$ of respective regions are compared, respectively. If a difference $\varsigma$ is greater than a set threshold value $\sigma$, it is considered proceeding to a second level of demand response for the loads. That is, within a range of load capacity for participation in demand response, it is considered transferring loads of some nodes of high marginal carbon emission from a region with high average carbon emission quota to a region with low average carbon emission quota, that is, this region with low average carbon emission quota adds, on the basis of its original load, some further loads $\Delta P_{load\text{-EX-A}j}$ transferred from some regions, and it is obtained that

$$P'_{load-Aj} = P_{load-Aj} + \Delta P_{load-\text{EX}-Aj}.$$

$$\begin{cases} \min \sum_{i=1}^{N_j} \lambda'_{ci} P'_{Di} \\ s.t. \quad \sum_{i=1}^{N_j} P'_{Di} = P'_{load-A_j} \quad , \ \forall j \in N_A \\ P'^{\min}_{Di} \leq P'_{Di} \leq P'^{\max}_{Di} \end{cases} \quad (5)$$

As mentioned above, performing regional division for the loads to participate in demand response can get rid of the disadvantage that the outcome of demand response without regional division is limited by the load capacity, and further enhance the initiative of the user side to participate in system-level carbon reduction/reducing. From the perspective of practical application, it is possible for manufacturing enterprises and companies in the city, such as a water supply company and the one having multiple different regions to significantly reduce the total carbon emission at the user side according to the above demand response strategies and improve effective interaction between the user side and the power supply side.

Demand response strategy under fault condition

When there are line disconnection in the power grid, generator failure at power supply side, and wind and solar power abandonment as a result of insufficient high/low voltage ride through capacity for new energy access, or even when severe power grid failure happens so that the grid disintegrates into "islands" for operation, the user side immediately switches from a mode of participating in demand response that targets at reducing carbon emissions under a normal operating condition to a demand response mode targeting at voltage stability. After the operation of the power grid is stabilized, the user side then switches back to the operating mode for carbon reduction/reducing.

Therefore, under the fault condition, power flow calculation (i.e., the formula (1) should be carried out equally on the power transmission network, the power distribution network, or the microgrid under investigation. If the power grid does not suffer from disintegration under the fault condition, the corresponding power flow equations can be solved using the Newton-Raphson method or the improved Levenberg-Marquardt method, and the voltage stability indicators of individual branches are calculated, that is,

$$L_i = 4(XP_j - RQ_j)^2 + XQ_j + RP_j \quad (6)$$

in which $P_i$, $Q_i$ represent active power and reactive power of a node $i$ at intermediate segment of a line, $P_j$, $Q_j$ represent active power and reactive power of a node $j$ at the end of the line, and $R$, $X$ represent the resistance and the reactance between a line i-j. Therefore, a voltage stability indicator of the entire system is taken as the maximum voltage stability indicator $L$ of all branches, and the degree of voltage stability of the system can be determined based on a gap between the value $L$ and a critical value of 1.0. According to the formula (7) below, a model for the loads to participate in demand response under the fault condition based on the voltage stability indicators $L_i$ of the branches is that

$$\begin{cases} \min \ \sum_{i=1}^{N} L_i Q_{\mathrm{BL}i} \\ \\ s.t. \ \ \sum_{i=1}^{N} Q_{\mathrm{BL}i} \ = \ Q_{load} \\ \\ Q_{\mathrm{BL}i}^{\min} \ \leq \ Q_{\mathrm{BL}i} \ \leq \ Q_{\mathrm{BL}i}^{\max} \end{cases} \tag{7}$$

in which $Q_{\mathrm{BL}i}$ is reactive power of loads on the ith branch, $Q_{load}$ is total reactive power of loads of all branches in the system, and $Q_{\mathrm{BL}i}^{\max}$, $Q_{\mathrm{BL}i}^{\min}$ are upper and lower limits of the reactive power of loads on the ith branch. After allocation of the reactive power of loads on the branches is determined, the reactive power of loads at individual nodes are determined by calculation. Assuming that the loads of an individual node employ a constant power factor, upon determination of the reactive power of loads of the node, the active power of loads of the node can be determined. After the system fault is eliminated and the system is stabilized, the system then operates in the demand response mode targeting at minimizing carbon emissions at system level.

Under fault conditions, if a serious fault occurs and causes the power grid to operate as "islands", in order to avoid the situation where Jacobian matrix of the power flow equation of an "islanded" grid is singular so that the Newton method fails to converge or has no solution, the improved Levenberg-Marquardt method can be used to obtain the least squares solution, thereby providing information for subsequent power flow adjustment and improvement. After the power flow calculation of the "islanded" grids is completed, appropriate adjustments are made to ensure the stable operation of the "islanded" grids. First is to carry out power flow calculation for the major power grid through virtual interconnection lines among the "islanded" grids by following an idea of performing alternating iteration of power flow. The power flow calculation of the "islanded" grids is completed until power errors of the virtual interconnection lines are within a predetermined error accuracy range, and real interconnection lines are further added to gradually restore the power grid to a stable state like that before the fault. Secondly, after the power flow calculation of the "islanded" microgrid is completed, the loads are redistributed based on the demand response strategy targeting at voltage stability in the formula (7) by following an idea of performing regional division on the loads in accordance of the normal operation condition, so that the "islanded" grids are restored to a stable state. Then, through the alternating iteration algorithm of power flow, interconnection lines are added to restore the system to the stable state before the fault. When the fault condition reaches a normal stable operating state by adding the interconnection lines and redistributing the loads, the system then carries out the demand response mode targeting at minimizing carbon emissions at system level.

In summary, the present disclosure proposes a demand response strategy of minimizing system carbon emissions in the case that the power transmission network, the power distribution network and the microgrid are all under normal operating conditions. In this case, according to differences in system construction, it is discussed about demand response strategies for the loads of the system that are subjected to regional division and no regional division, respectively, so that it is possible to further break the limitation of original demand response strategy of the system being limited by load capacity of the system, thereby reducing the total carbon emission of the entire system. Turning to a mode regarding fault, firstly, it is discussed about the power flow calculation method for restoring from a "fault" operating mode to a "normal" operating mode, then it is proposed a demand response strategy targeting at system voltage stability, and finally, when the major system has operated stably, a demand response mode targeting at carbon reduction/reducing under the normal operating condition, thereby further reducing the total carbon emission of the entire major system.

The beneficial effects of the present disclosure are as follows.

1. It is innovatively proposed a demand response method based on node marginal carbon emissions, which is applicable to a power transmission network, a power distribution network, a microgrid, etc. and is implemented in such a way that it is loads at user side to participate in demand response, thereby achieving further carbon saving and reduction at the end of loads.

2, In the case of normal operating condition, it is proposed for the first time a demand response mode based on regional division of loads. By calculating average carbon emission quotas of respective regions, it is possible that the loads are further transferred from a node of high marginal carbon emission in a region of high average carbon emission to a node of low marginal carbon emission in a region of low average carbon emission, thereby breaking the limitation of original demand response mode being limited by load capacity, and further reducing total carbon emission at an end of loads.

3. In the case of fault operating conditions, it is adopted a demand response mode based on voltage stability indicators of branches in the system to restore the system to its original normal stable operating condition, then it is adopted the demand response strategy based on node marginal carbon emissions to achieve the goal of further reducing the total carbon emission of the system.

At present, researches on carbon reduction/reducing in the power industry mainly focus on power source end and load end. The power source end mainly reduces carbon dioxide emissions by installing carbon capture devices, adjusting power supply structure to reduce the proportion of coal-fired power generation, and improving the efficiency of coal-fired power units; and the load end mainly achieves the goal of carbon saving and reduction in such a way that a user participates in demand response based on signals such as carbon emission intensity and marginal carbon emission. However, the carbon reduction approaches at the power source end have limitation to some extent. Firstly, the cost of carbon capture devices, the renovation cost of traditional power plants, and how to improve the efficiency of coal-fired power units have become fundamental problems against carbon reduction/reducing at the power source end; while currently the mode at the load end of participating in demand response based on carbon emission signals is mainly limited by load capacity of response, which fails to achieve load balancing and significant carbon reduction and thus still cannot be widely applied in practical situations. The present disclosure provides a demand response method based on node marginal carbon emissions, which is applicable to power grids such as the power transmission network, the power distribution network, and the microgrid, and further discusses in detail about implementations under normal and fault conditions of the power grid. Under the normal operating condition, an innovative mode regarding regional division of loads for participating in demand response has been proposed for the first time, which solves the problem that loads for participating in demand response are limited by a capacity limit so that the loads are allowed to participate in demand response to the maximum extent, thereby achieving the goal of reducing carbon emissions at system level. Under the fault conditions, voltage stability indicators of branches are used as a demand response signal to quickly transition the system from a fault condition to the normal stable condition, then the demand response strategy based on node marginal carbon emissions is adopted, thereby achieving the effect of carbon reduction/reducing in the entire system. The present disclosure requires no additional hardware facility, but only reservation of sample storage space on underlying control software of the device, which is used for storage of the loads and the node marginal carbon emission signals under actual operating conditions as well as calculation of the demand response model. The method is simple, safe, and reliable.

Embodiment 3

In the present embodiment, as shown in Fig. 2, provided is an apparatus for processing carbon emission demand response, including: a model establishing module 210, a marginal carbon emission quota acquisition module 220, and a response processing module 230.

The model establishing module 210 is configured to establish an optimal power flow model targeting at minimizing carbon emissions at system level for a power transmission network, a power distribution network, and a microgrid; the marginal carbon emission quota acquisition module 220 is configured to solve the optimal power flow model to obtain related Lagrangian multipliers in front of power flow equations of individual nodes, wherein a related Lagrangian multiplier in front of a power flow equation of an individual node is defined as a node marginal carbon emission quota; and the response processing module 230 is configured to process participation in demand response according to the optimal power flow model by subjecting loads to regional division and/or no regional division.

In one embodiment, the response processing module includes a non-division processing unit for processing, in the case that the loads are subjected to no regional division, participation in demand response according to the optimal power flow model, based on the marginal carbon emission quotas of individual nodes, with the goal of minimizing carbon emissions at user side.

In one embodiment, the response processing module includes: a subregion dividing unit for dividing the power grid system into a plurality of subregions in the case that the loads are subjected to regional division; a subregion carbon emission quota calculation unit for calculating average carbon emission quotas of respective subregions according to the optimal power flow model; a subregion load transfer unit for comparing the average carbon emission quotas of respective subregions, and transferring the loads of some nodes in a subregion with a high average carbon emission quota to a subregion with a low average carbon emission quota when difference in the average carbon emission quotas of the respective subregions is greater than a preset threshold.

In one embodiment, the apparatus for processing carbon emission demand response further includes: a branch voltage stability indicator acquisition unit for performing, under a fault condition, power flow calculation on the power transmission network, the power distribution network, and the microgrid based on the preset power flow equations to obtain voltage stability indicators of individual branches in the system; a branch power calculation unit for calculating load reactive power of the branches based on the optimal power flow model and the voltage stability indicators of individual branches; and a node power calculation unit for calculating load reactive power of individual nodes based on the load reactive power of the branches, and determining load active power of individual nodes based on the load reactive power of individual nodes.

In one embodiment, the marginal carbon emission quota acquisition module is configured to solve the optimal power flow model using Primal-dual interior point method, and obtain the related Lagrangian multipliers in front of the power flow equations of individual nodes.

In one embodiment, the model establishing module includes: a minimum carbon emission objective function establishing unit for establishing objective functions that minimize system carbon emissions for the power transmission network, the power distribution networks, and the microgrid, respectively; an equality-formed constraint equation acquisition unit for obtaining power flow equations corresponding to power balance of the nodes in the power transmission network, the power distribution network, and the microgrid, respectively, and applying the power flow equations corresponding to power balance of the nodes as equality-formed constraint equations for the system carbon emission optimization; an inequality-formed constraint equation acquisition unit for obtaining safety constraints for the power transmission network, the power distribution network, and the microgrid, respectively, and establishing inequality-formed constraint equations for system carbon emission optimization based on the constraints, wherein the safety constraints include active and reactive power output limits for a generator unit, voltage amplitude limit of a node, power limit of a line, and frequency limit of a system; and a model establishing unit for establishing an optimal power flow model targeting at minimizing carbon emissions at system level based on the objective functions that minimize system carbon emissions, the equality-formed constraint equations, and the inequality-formed constraint equations.

In one embodiment, the optimal power flow model with the goal of minimizing carbon emissions at system level is:

$$\begin{cases} \min \ f(\boldsymbol{x}) \\ s.t. \quad h(\boldsymbol{x}) \ = \ 0 \\ \qquad g(\boldsymbol{x}) \ \geq \ 0 \end{cases}$$

in which, $f(\boldsymbol{x})$ represents objective functions of the system, $h(\boldsymbol{x})$ represents a power flow equation of the transmission or distribution network, it also represents a power flow equation and a droop node control equation that are modified with respect to the microgrid, $g(\boldsymbol{x})$ represents an inequality-formed constraint composed of the safety constraints of the system, and $\boldsymbol{x}$ represents a vector composed of a state variable and a control variables of the system.

The specific definition of the apparatus for processing carbon emission demand response can make reference to the previous definition regarding the method for processing carbon emission demand response, which will not be described any further here. The various units in the above-mentioned apparatus for processing carbon emission demand response can be fully or partially implemented through software, hardware, and their combinations. These units may be embedded in or independent of, in a form of hardware, a processor in a computer device, or may be stored, in a form of software, in a memory of the computer device, for easy calling and executing corresponding operations of these units by the processor.

Embodiment 4

In the present embodiment, a computer device is provided. A diagram of an internal structure thereof is shown in Fig. 3. The computer device includes a processor, a memory, a network interface, a display screen, and an input device, which are connected through a system bus. In this case, the processor of the computer device is configured to provide computing and control capabilities. The memory of the computer device includes non-volatile storage medium and memory storage. This non-volatile storage medium stores an operating system and a computer program, and the non-volatile storage medium is equipped with a database. The memory storage provides an environment for the operation of the operating system and the computer program in the non-volatile storage medium. The network interface of the computer device is configured to communicate with other computer devices that have equipped with application software. The computer program, when being executed by the processor, implements a method for processing carbon emission demand response. The display screen of the computer device may be a liquid crystal display screen or an electronic ink display screen. The input device of the computer device may be a touch layer covered on the display screen, a button, trackball, or touchpad arranged on a casing of the computer device, or an external keyboard, touchpad, or mouse.

It can be can understand by a person skilled in the art that the structure shown in Fig. 3 is only a block diagram showing a portion of structures related to the technical solutions of the present disclosure, and does not constitute a limitation to the computer device applied to the solutions of the present disclosure. The specific computer device can include more or fewer components than those shown in the figure, combine certain components, or have a different component arrangement.

In one embodiment, a computer device is provided, including a memory and a processor, wherein the memory stores a computer program which, when being executed by the processor, implements steps of the method for processing carbon emission demand response as described above and achieves the corresponding technical outcome, which will not be described any further here.

Embodiment 5

In the present embodiment, a computer-readable storage medium is provided, on which a computer program is stored, wherein the computer program, when being executed by the processor, implements the steps of the method for processing carbon emission demand response as described above and achieves the corresponding technical outcome, which will not be described any further here.

The above-mentioned method, apparatus, computer device, and storage medium for processing carbon emission demand response are applicable to the demand response processing method of marginal carbon emissions of nodes in power transmission networks, power distribution networks, and a microgrid, and further achieve carbon saving and reduction at the end of loads in such a way that it is loads at user side to participate in demand response.

In addition, in the embodiment, in the case of normal operating condition, a demand response mode based on regional division of loads enables the loads to be further transferred from a node of high marginal carbon emission in a region of high average carbon emission to a node of low marginal carbon emission in a region of low average carbon emission by calculating average carbon emission quotas of respective regions, thereby breaking the limitation of original demand response mode being limited by load capacity, and further reducing total carbon emission at the end of loads.

In addition, in the embodiment, in the case of fault operating conditions, it is adopted, firstly, a demand response mode based on voltage stability indicators of branches in the system to restore the system to its original normal stable operating condition, and then the demand response strategy based on node marginal carbon emissions to achieve the goal of further reducing the total carbon emission of the system.

It can be understood by a person of ordinary skill in the art that implementation of all or part of processes in the method according to these above embodiments can be accomplished by instructing relevant hardware through a computer program. The computer program can be stored in a non-volatile computer-readable storage medium, and the computer program, when being executed, can include the processes in the embodiments of the above method. In this case, any reference to memory, storage, database, or other medium adopted in the various embodiments provided by the present disclosure can each include non-volatile and/or volatile memory. Non-volatile memory may include read-only memory (ROM), programmable ROM (PROM), electrically programmable ROM (EPROM), electrically erasable programmable ROM (EEPROM), or flash memory. Volatile memory may include random access memory (RAM) or external cache memory. As an explanation rather than limitation, RAM is available in various forms, such as static RAM (SRAM), dynamic RAM (DRAM), synchronous DRAM (SDRAM), dual data rate SDRAM (DDRSDRAM), enhanced SDRAM (ESDRAM), synchlink DRAM (SLDRAM), Rambus direct RAM (RDRAM), direct memory bus dynamic RAM (DRDRAM), and memory bus dynamic RAM (RDRAM).

The various technical features of the above embodiments can be combined arbitrarily. To make the description concise, all possible combinations of the various technical features in the above embodiments have not been described exhaustively. However, a combination of these technical features should be considered within the scope of the present disclosure as long as there is no conflict therein.

The above embodiments illustrate only several implementations of the present disclosure with a manner of description of more specific and detailed, which, however, should not be understood as a limitation on the scope of the present disclosure. It should be noted for the person of ordinary skill in the art that several modifications and improvements can be made without departing from the proposals of the present disclosure, all of which fall within the scope of protection of the present disclosure. Therefore, the scope of protection of the present disclosure shall be based on the attached claims.

**Claims**

1. A method for processing carbon emission demand response, comprising:

   establishing an optimal power flow model targeting at minimizing carbon emissions at system level for a power transmission network, a power distribution network, and a microgrid;
   solving the optimal power flow model to obtain related Lagrangian multipliers in front of power flow equations of individual nodes, and defining a related Lagrangian multiplier in front of a power flow equation of an individual node as a node marginal carbon emission quota; and
   processing participation in demand response based on the optimal power flow model by subjecting loads to regional division and/or no regional division.

2. The method according to claim 1, **characterized in that** processing participation in demand response based on the optimal power flow model by subjecting loads to regional division and/or no regional division comprises:
processing, when the loads are subjected to no regional division, participation in demand response according to the optimal power flow model, based on respective node marginal carbon emission quotas, with minimization of carbon emissions at user side as a goal of demand response.

3. The method according to claim 1, **characterized in that** the method of processing participation in demand response based on the optimal power flow model by subjecting loads to regional division and/or no regional division comprises:

dividing, when the loads are subjected to regional division, power grid system into a plurality of subregions;
calculating average carbon emission quotas for respective subregions based on the optimal power flow model; and
comparing the average carbon emission quotas of respective subregions, and transferring the loads of some nodes in a subregion with a high average carbon emission quota to a subregion with a low average carbon emission quota when difference in the average carbon emission quotas of the respective subregions is greater than a preset threshold.

4. The method according to claim 1, **characterized in that** after solving the optimal power flow model to obtain related Lagrangian multipliers in front of the power flow equations of individual nodes and defining the related Lagrangian multipliers in front of the power flow equations of individual nodes as node marginal carbon emission quotas, the method further comprises:

performing, under a fault condition, power flow calculation on the power transmission network, the power distribution network, and the microgrid based on the preset power flow equations to obtain voltage stability indicators of individual branches in power grid system;
obtaining load reactive power of the branches, respectively, by calculation based on the optimal power flow model and the voltage stability indicators of individual branches;
obtaining load reactive power of individual nodes, respectively, by calculation based on the load reactive power of the branches, and determining load active power of individual nodes, respectively, based on the load reactive power of individual nodes.

5. The method according to claim 1, **characterized in that** solving the optimal power flow model to obtain related Lagrangian multipliers in front of the power flow equations of individual nodes comprises:
solving the optimal power flow model by using Primal-dual interior point method to obtain the related Lagrangian multipliers in front of the power flow equations of individual nodes.

6. The method according to claim 1, **characterized in that** establishing an optimal power flow model targeting at minimizing carbon emissions at system level for a power transmission network, a power distribution network, and a microgrid comprises:

establishing objective functions that minimize system carbon emissions for the power transmission network, the power distribution network, and the microgrid, respectively;
obtaining power flow equations corresponding to power balance of the nodes in the power transmission network, the power distribution network, and the microgrid, respectively, and applying the power flow equations corresponding to power balance of the nodes as equality-formed constraint equations for system carbon emission optimization;
obtaining safety constraints for the power transmission network, the power distribution network, and the microgrid, respectively, and establishing inequality-formed constraint equations for system carbon emission optimization based on the constraints, wherein the safety constraints include active and reactive power output limits for a generator unit, voltage amplitude limit of a node, power limit of a line, and frequency limit of a system; and
establishing an optimal power flow model targeting at minimizing carbon emissions at system level based on the objective functions that minimize system carbon emissions, the equality-formed constraint equations, and the inequality-formed constraint equations.

7. The method according to any one of claims 1 to 6, **characterized in that** the optimal power flow model targeting at minimizing carbon emissions at system level is:

$$\begin{cases} \min \ f(\boldsymbol{x}) \\ s.t. \quad \boldsymbol{h}(\boldsymbol{x}) \ = \ 0 \\ \qquad \boldsymbol{g}(\boldsymbol{x}) \ \geq \ 0 \end{cases}$$

in which $f(\boldsymbol{x})$ represents objective functions of the system, $\boldsymbol{h}(\boldsymbol{x})$ represents a power flow equation of the transmission or distribution network, it also represents a power flow equation and a droop node control equation that are modified with respect to a microgrid, $\boldsymbol{g}(\boldsymbol{x})$ represents an inequality-formed constraint composed of the safety constraints of the system, and $\boldsymbol{x}$ represents a vector composed of a state variable and a control variables of the system.

8. An apparatus for processing carbon emission demand response, comprising:

   a model establishing module configured to establish an optimal power flow model targeting at minimizing carbon emissions at system level for a power transmission network, a power distribution network, and a microgrid;
   a marginal carbon emission quota acquisition module configured to solve the optimal power flow model to obtain related Lagrangian multipliers in front of power flow equations of individual nodes, and define a related Lagrangian multiplier in front of a power flow equation of an individual node as a node marginal carbon emission quota; and
   a response processing module configured to process participation in demand response based on the optimal power flow model by subjecting loads to regional division and/or no regional division.

9. A computer device, comprising a memory and a processor, **characterized in that** the memory stores a computer program which, when being executed by the processor, implements steps of the method according to any one of claims 1 to 7.

10. A computer-readable storage medium, on which a computer program is stored, **characterized in that** the computer program, when being executed by the processor, implements steps of the method according to any one of claims 1 to 7.

| Establish an optimal power flow model targeting at minimizing carbon emissions at system level for power transmission network, power distribution network and microgrid | 110 |

| Solve the optimal power flow model to obtain related Lagrangian multipliers in front of power flow equations of individual nodes, and define a related Lagrangian multiplier in front of a power flow equation of each node as a node marginal carbon emission quota | 120 |

| Process participation in demand response based on the optimal power flow model by subjecting loads to regional division and/or no regional division | 130 |

Fig. 1

| Model establishing module | 210 |

| Marginal carbon emission quota acquisition module | 220 |

| Response processing module | 230 |

Fig. 2

Fig. 3

Fig. 4A

Fig. 4B

Fig. 4C

Fig. 5

## INTERNATIONAL SEARCH REPORT

| | International application No. |
|---|---|
| | **PCT/CN2022/121563** |

| **A.** | **CLASSIFICATION OF SUBJECT MATTER** |
|---|---|

H02J 3/06(2006.01)i

According to International Patent Classification (IPC) or to both national classification and IPC

| **B.** | **FIELDS SEARCHED** |
|---|---|

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 碳排放, 最小化, 最优, 潮流, 方程, 需求, 响应, 节点, 拉格朗日, 分区, carbon, emission, minimi+, optimal, power, flow, OPF, equation, demand, response, node, Lagrange, region

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | CN 111563637 A (ZHUZHOU CRRC TIMES ELECTRIC CO., LTD.) 21 August 2020 (2020-08-21) <br> description, paragraphs [0040]-[0093] | 1-3, 5-10 |
| Y | CN 111563637 A (ZHUZHOU CRRC TIMES ELECTRIC CO., LTD.) 21 August 2020 (2020-08-21) <br> description, paragraphs [0040]-[0093] | 4 |
| Y | CN 112994014 A (SHANDONG UNIVERSITY) 18 June 2021 (2021-06-18) <br> description, paragraphs [0004] and [0029]-[0104] | 4 |
| A | CN 109636113 A (GUIZHOU POWER GRID CO., LTD.) 16 April 2019 (2019-04-16) <br> entire document | 1-10 |
| A | CN 113780776 A (ELECTRIC POWER RESEARCH INSTITUTE, CHINA SOUTHERN POWER GRID et al.) 10 December 2021 (2021-12-10) <br> entire document | 1-10 |
| A | US 2015355655 A1 (SHANGHAI JIAO TONG UNIVERSITY) 10 December 2015 (2015-12-10) <br> entire document | 1-10 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 December 2022** | **21 December 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/121563**

| Patent document cited in search report | | | Publication date (day/month/year) | Patent family member(s) | | | Publication date (day/month/year) |
|---|---|---|---|---|---|---|---|
| CN | 111563637 | A | 21 August 2020 | None | | | |
| CN | 112994014 | A | 18 June 2021 | None | | | |
| CN | 109636113 | A | 16 April 2019 | None | | | |
| CN | 113780776 | A | 10 December 2021 | None | | | |
| US | 2015355655 | A1 | 10 December 2015 | WO | 2015184662 | A1 | 10 December 2015 |
| | | | | CN | 104008434 | A | 27 August 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210088506